# EUROPEAN PATENT APPLICATION

(11) **EP 4 379 936 A1**
(43) Date of publication of application: **05.06.2024**
(21) Application number: 23820151.1
(22) Date of filing: 09.06.2023
(51) Int. Cl.: H01M 50/358, H01M 50/249, H01M 50/204, H01M 10/6551

(54) **BATTERY PACK AND VEHICLE COMPRISING SAME**

(30) Priority: 10.06.2022 KR 20220070539; 27.04.2023 KR 20230055776
(71) Applicant: LG Energy Solution, Ltd., Seoul 07335 (KR)
(72) Inventor: JEONG, Jong-Ha, Daejeon 34122 (KR); KWON, Woo-Yong, Daejeon 34122 (KR); KIM, In-Soo, Daejeon 34122 (KR); PARK, Jin-Yong, Daejeon 34122 (KR); CHI, Ho-June, Daejeon 34122 (KR)
(74) Representative: Goddar, Heinz J.
(86) International application number: PCT/KR2023/007981
(87) International publication number: WO 2023/239216

(57) **Abstract**

A battery pack of the present disclosure includes a plurality of pouch-type battery cells; a pack case accommodating the plurality of pouch-type battery cells in an inner space; and a cell cover configured to partially surround the outer side of at least one pouch-type battery cell among the plurality of pouch-type battery cells to form an opening, wherein the pack case includes a flame-retardant portion on the side where the opening is located.

## Description

### TECHNICAL FIELD

The present disclosure relates to a battery pack and a vehicle including the same, and more specifically, to a battery pack having improved stability and a vehicle including the same. The present application claims priority to Korean Patent Application No. 10-2022-0070539 filed on June 10, 2022 and Korean Patent Application No. 10-2023-0055776 filed on April 27, 2023, the disclosures of which are incorporated herein by reference.

### BACKGROUND ART

As the technology development and demand for various mobile devices, electric vehicles, energy storage systems (ESSs), and the like increase significantly, the interest in and demand for secondary batteries as an energy source are rapidly increasing.

Nickel cadmium batteries or nickel hydrogen batteries have been widely used as conventional secondary batteries, but recently, lithium secondary batteries having advantages of free charge/discharge, very low self-discharge rate, and high energy density due to little memory effect compared to nickel-based secondary batteries, are widely used.

These lithium secondary batteries mainly use a lithium-based oxide and a carbon material as a positive electrode active material and a negative electrode active material, respectively. Lithium secondary batteries include an electrode assembly in which a positive electrode plate and a negative electrode plate coated with the positive electrode active material and the negative electrode active material, respectively, are disposed with a separator therebetween, and an exterior material that seals and accommodates the electrode assembly together with an electrolyte, that is, a battery case.

In general, secondary batteries may be classified into can-type batteries in which electrode assemblies are embedded in a metal can and pouch-type batteries in which electrode assemblies are embedded in a pouch of aluminum laminate sheets, depending on the shape of an exterior material.

Recently, battery modules have been widely used for driving or energy storage in medium to large-sized devices such as electric vehicles or energy storage systems.

A conventional battery pack includes one or more battery modules and a control unit for controlling charge/discharge of the battery modules inside a pack case. Here, the battery module is configured to include a plurality of battery cells inside a module case. That is, in the case of a conventional battery pack, a plurality of battery cells (secondary batteries) are accommodated inside a module case to form each battery module, and one or more of these battery modules are accommodated inside a pack case to form a battery pack. In particular, in the case of pouch-type batteries, they have advantages in various aspects, such as light weight and small dead space during stacking, but have problems in that they are vulnerable to external impact and have somewhat poor assembly. Therefore, it is common to manufacture a battery pack in a form in which a plurality of cells are first modularized and then accommodated inside a pack case.

However, in the case of a conventional battery pack, it may be disadvantageous in terms of energy density, assemblability, coolability, and the like due to modularization. In particular, in the case of a pouch-type battery cell, swelling may occur, and conventional battery packs have a problem of being difficult to adequately cope with such a swelling situation.

In addition, in the case of a conventional battery pack, it may be disadvantageous in terms of energy density, assemblability, coolability, and the like due to modularization.

In addition, in the case of a conventional battery module or battery pack, it may be vulnerable to thermal events. In particular, when a thermal event occurs inside the battery module or battery pack, thermal runaway may occur, resulting in flames and, in severe cases, explosions.

### DISCLOSURE

### Technical Problem

The present disclosure is designed to solve the problems of the related art, and therefore the present disclosure is directed to providing a battery pack that is excellent in various aspects such as swelling response performance and a vehicle including the same.

Also, in order to solve another problem, the present disclosure is directed to providing a battery pack capable of securing excellent stability when a thermal event occurs and a vehicle including the same.

In particular, it is directed to providing a battery pack capable of preventing heat propagation to adjacent battery cells by reducing the intensity of flames and controlling reverse flow when a thermal event occurs inside the battery pack and a vehicle including the same.

However, technical problems to be solved by the present disclosure are not limited to the above-described problems, and other problems not mentioned herein may be clearly understood by those skilled in the art from the following description of the present disclosure.

### Technical Solution

A battery pack according to one aspect of the present disclosure for solving the above-described problem includes a plurality of pouch-type battery cells; a pack case accommodating the plurality of pouch-type battery cells in an inner space; and a cell cover configured to partially surround the outer side of at least one pouch-type battery cell among the plurality of pouch-type battery cells to form an opening.

The pack case may include a flame-retardant portion on the side where the opening is located.

The flame-retardant portion may be configured to reduce the straightness of the gas and flame generated from the at least one pouch-type battery cell to pass therethrough.

The inner space of the pack case may include a storage space for accommodating the plurality of pouch-type battery cells; and a venting space around the storage space.

The inner space of the pack case may allow the gas and flame passing through the flame-retardant portion to be discharged to the outside of the pack case through the venting space.

The cell cover may be in plurality.

The flame-retardant portion may include an isolation portion provided at a corresponding position between adjacent cell covers; and a capture portion provided at a position corresponding to the opening of each of the cell covers.

At least a portion of the isolation portion may be located between the storage space and the venting space.

The capture portion may be located within the venting space.

The pack case may include an accommodation portion configured to accommodate the flame-retardant portion.

The flame-retardant portion may include a coupling portion configured to be coupled to the pack case.

The flame-retardant portion may be a wedge-shaped structure including a wavy shape in a cross-section of at least one end.

The cell cover may include a first cover portion covering one side surface of the wrapped pouch-type battery cell; a second cover portion covering the other side surface of the wrapped pouch-type battery cell; and a top cover portion connecting the first cover portion and the second cover portion and covering one side of the wrapped pouch-type battery cell.

Each of the plurality of pouch-type battery cells may include an electrode lead.

The cell cover may form the opening at an end of the side where the electrode lead is provided among ends of the first cover portion and at an end of the side where the electrode lead is provided among ends of the second cover portion.

The battery pack may further include a side assembly covering the opening.

At least a portion of the side assembly may be inserted into the cell cover.

The side assembly may include a bus bar assembly configured to electrically connect the electrode leads; and an end cover covering one side of the bus bar assembly and configured to discharge gas generated from at least a portion of the wrapped pouch-type battery cell.

The side assembly may include an intermediate cover between the bus bar assembly and the end cover for insulation.

The side assembly may include a mesh portion.

The battery pack may include a thermal resin in at least a portion of the space between the cell cover and the pack case and the space between the plurality of pouch-type battery cells and the pack case.

The cell cover may be configured to support the pouch-type battery cell in a state of standing between the first cover portion and the second cover portion.

The cell cover may include an insulating coating layer on at least a portion of the inner surface of the first cover portion and the inner surface of the second cover portion.

The cell cover may include an adhesive member on at least a portion of the outer surface of the first cover portion and the outer surface of the second cover portion.

A vehicle according to the present disclosure may include a battery pack according to the present disclosure.

### Advantageous Effects

According to one aspect of the present disclosure, a plurality of pouch-type battery cells may be stably accommodated inside a pack case without a configuration such as a stacking frame like a plastic cartridge, a separate module case, or the like.

Moreover, a cell to pack (CTP) type battery pack using pouch-type battery cells may be implemented more efficiently. That is, the battery pack may be provided in a form of directly accommodating the pouch-type battery cells inside the pack case, rather than accommodating the pouch-type battery cells inside a separate module case and then accommodating the module case inside the pack case.

According to this configuration of the present disclosure, the flame and gas generated in the event of a thermal event inside the battery pack are directed to the flame-retardant portion through the opening, and the flame and gas continuously collide between some spaces formed in the flame-retardant portion. Therefore, as the straightness of the flame and gas decreases, the flame and gas may be discharged in a state where the intensity thereof decreases. In addition, the gas may be discharged in a desired direction by providing the flame-retardant portion at a position where the flame and gas are easily discharged.

According to another aspect of the present disclosure, a side assembly is inserted into a cell cover, and thus the cell cover and the side assembly may be efficiently coupled by such a structure. In addition, an end cover covers a portion of the pouch-type battery cell that is not covered by the cell cover, thereby providing more stable protection.

According to still another aspect of the present disclosure, when the gas and/or flame are generated due to swelling or thermal runaway in the pouch-type battery cell, they may be discharged to the outside of the cell unit through a first venting portion. Therefore, by inducing side venting, it is possible to prevent the gas and/or flame from being randomly discharged through the open portion of the cell cover.

According to still another aspect of the present disclosure, the flow of flame that may occur in the pouch-type battery cell may be primarily blocked by an intermediate cover, thereby reducing the intensity of the flame and preventing the rapid discharge of the flame to the first venting portion. In addition, a short circuit caused by contact between a bus bar assembly and the end cover may be prevented.

As described above, according to the present disclosure, it is possible to provide a battery pack that is excellent in various aspects such as swelling response performance and a vehicle including the same. In addition, it is possible to provide a battery pack capable of securing excellent safety when a thermal event occurs and a vehicle including the same.

### DESCRIPTION OF DRAWINGS

FIG. 1 is a view showing a battery pack according to the present disclosure.
FIG. 2 is an exploded perspective view of a battery pack according to the present disclosure.
FIG. 3 is a view showing a pouch-type battery cell and a cell cover included in a battery pack according to the present disclosure.
FIG. 4 is a view showing some components included in a battery pack according to the present disclosure.
FIG. 5 is a view showing an exemplary form of a flame-retardant portion included in a battery pack according to the present disclosure.
FIG. 6 is a view showing the path of gas and flame generated from a cell unit included in a battery pack according to the present disclosure.
FIG. 7 is a view showing a partial cross-section of a battery pack according to the present disclosure.
FIG. 8 is an enlarged view of a portion of FIG. 7.
FIG. 9 is a view showing some components of a battery pack according to the present disclosure.
FIG. 10 is a view showing a bus bar assembly included in a battery pack according to the present disclosure.
FIG. 11 is a view showing an end cover included in a battery pack according to the present disclosure.
FIG. 12 is a view showing an intermediate cover included in a battery pack according to the present disclosure.
FIG. 13 is a view showing a partial cross-section of a battery pack according to the present disclosure.
FIG. 14 is a view showing a vehicle according to the present disclosure.

### BEST MODE

Hereinafter, preferred embodiments of the present disclosure will be described in detail with reference to the accompanying drawings. The accompanying drawings herein illustrate preferred embodiments of the present disclosure and serve to further understand the technical aspects of the present disclosure together with the following detailed description, so the present disclosure should not be construed as limited to those described in the drawings. The same reference numerals refer to the same components. Also, in the drawings, the thickness, ratio, and dimensions of the components may be exaggerated for effective description of the technical content.

It should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

The terms indicating directions as used herein such as upper, lower, left, right, front, and rear are used for convenience of description only, and it is obvious to those skilled in the art that the term may change depending on the position of the stated element or an observer.

Therefore, since the embodiments described herein and the configurations shown in the drawings are only the most preferred embodiments of the present disclosure and do not represent all of the technical aspects of the present disclosure, it should be understood that there may be various equivalents and modifications to be substituted for them at the time of this application.

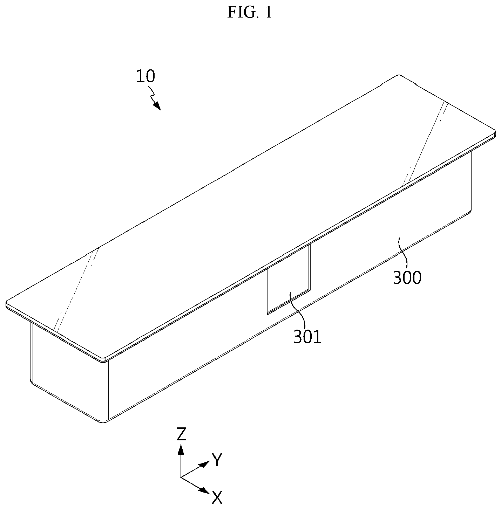

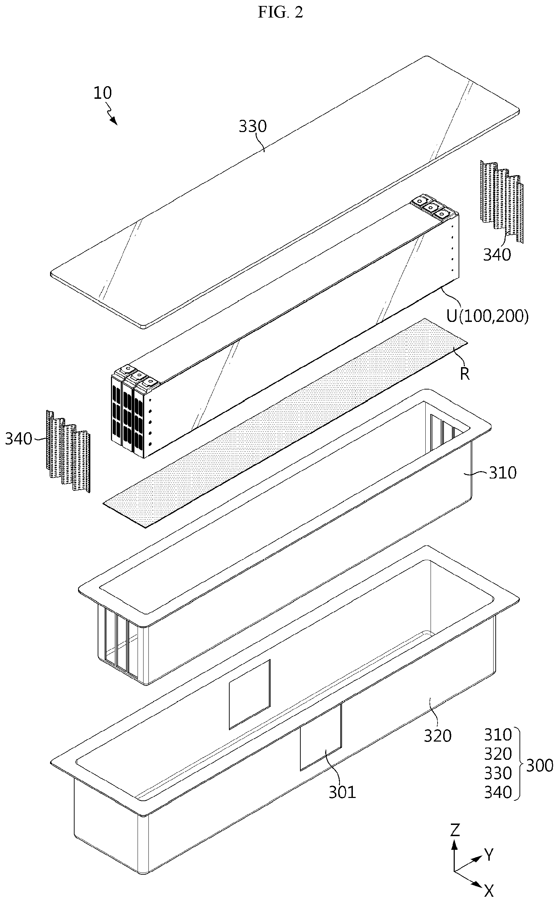

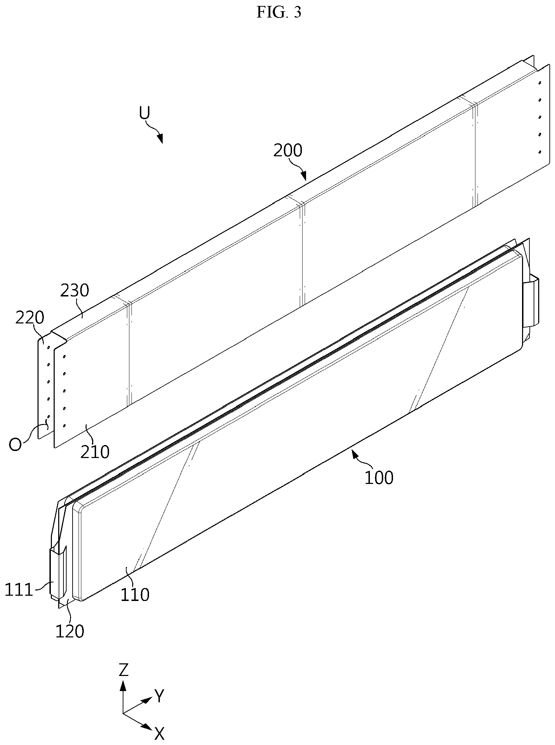

FIG. 1 is a view showing a battery pack according to the present disclosure. FIG. 2 is an exploded perspective view showing some components of a battery pack according to the present disclosure. FIG. 3 is a view showing a pouch-type battery cell and a cell cover included in a battery pack according to the present disclosure.

Referring to FIGS. 1 to 3, the battery pack 10 according to the present disclosure includes a plurality of pouch-type battery cells 100, a pack case 300, and a cell cover 200.

The pouch-type battery cell 100 may include an electrode assembly, an electrolyte, and a pouch exterior material. The pouch-type battery cell 100 may include a storage portion 110 accommodating an electrode assembly and a sealing portion 120 extending outward from the circumference of the storage portion 110. The pouch-type battery cell 100 may include an electrode lead 111. The electrode lead 111 may be drawn out respectively in both directions of the pouch exterior material, or may be drawn out only in one side. In the illustrated example, the electrode leads 111 are drawn out in both directions of the pouch-type battery cell 100 (Y-axis direction). The direction in which the electrode leads 111 are drawn out may be defined as the longitudinal direction of the pouch-type battery cell 100, in other words, it may also be said that the electrode leads 111 are drawn out forward and backward along the longitudinal direction of the pouch-type battery cell 100, respectively.

Referring to FIGS. 2 and 3, the pouch-type battery cell 100 may be surrounded by a cell cover 200 to form a cell unit U.

Referring to FIGS. 2 and 3, the battery pack 10 includes a plurality of such cell units U, and thus a plurality of pouch-type battery cells 100 may be included in the battery pack 10. A plurality of pouch-type battery cells 100 may be stacked in at least one direction. The plurality of pouch-type battery cells 100 may be stacked and disposed in the left-right direction (X-axis direction). Referring to FIG. 3, two pouch-type battery cells 100 are stacked in the left-right direction to form one cell unit U, and referring to FIG. 2, three of such cell units U are stacked in the left-right direction and are disposed within the pack case 300 in a 1×3 arrangement.

The cell cover 200 may be configured to partially surround the outer side of at least one pouch-type battery cell 100 to form an opening O. The cell cover 200 may be configured to surround a portion of the plurality of pouch-type battery cells 100 stacked in the left-right direction. The cell cover 200 may be configured to form an opening O on the side where the electrode lead 111 is provided.

The cell cover 200 may be configured to group and unitize the plurality of pouch-type battery cells 100 included in the battery pack 10. One cell cover 200 may constitute one cell unit U. For example, one cell unit U is shown in FIG. 3 and a plurality of cell units U are shown in FIG. 2. The cell cover 200 may surround at least three surfaces of the pouch-type battery cell 100.

A plurality of cell units U may be included in the battery pack 10, and in this case, the cell cover 200 may be included in the battery pack 10 in plurality. When the cell cover 200 surrounds two or more pouch-type battery cells 100, the battery pack 10 may include a smaller number of cell covers 200 than the number of pouch-type battery cells 100.

The cell unit U may also be referred to as a cell bank. According to the present disclosure, the cell cover 200 is in the form of partitioning the cell banks, and thus thermal runaway and explosion may be prevented for each cell bank.

The cell cover 200 may be made of various materials to secure rigidity. In particular, the cell cover 200 may be made of a metal material. In the case of such a metal material, the stacked state of the pouch-type battery cells 100 may be more stably maintained, and the pouch-type battery cells 100 may be more safely protected from external impact. The cell cover 200 may be made of SUS material. For example, the cell cover 200 may be entirely made of SUS material.

A thermal barrier (not shown) may be further included between adjacent cell covers 200. The thermal barrier may be configured in the form of a pad made of a heat insulating material or flame suppression material, and preferably, made of a compressible material. Preferably, the thermal barrier may be configured to be in close contact with the cell cover 200 between adjacent cell covers 200. Accordingly, the thermal barrier may be configured to suppress a swelling phenomenon that may occur in the pouch-type battery cell 100. In addition, the thermal barrier may delay the spread of flames due to thermal runaway, break heat transfer, and suppress the swelling phenomenon that may occur in the pouch-type battery cell 100 at the same time, thereby further ensuring the structural stability of the battery pack 10.

The cell cover 200 may be made of various materials to secure rigidity. In particular, the cell cover 200 may be made of a metal material. In the case of such a metal material, the stacked state of the pouch-type battery cells 100 may be more stably maintained, and the pouch-type battery cells 100 may be more safely protected from external impact. The cell cover 200 may be made of SUS material. For example, the cell cover 200 may be entirely made of SUS material.

In this way, when the cell cover 200 is made of a steel material, it has excellent mechanical strength and rigidity, and thus the stacked state of the pouch-type battery cell 100 may be more stably supported. Also, in this case, it is possible to more effectively prevent damage to or breakage of the pouch-type battery cell 100 from an external impact, such as an acicular body. In addition, in this case, handling of the pouch-type battery cell 100 may be more facilitated. Also, due to the high melting point, the overall structure may be stably maintained when a flame is generated from the battery cell 100. Due to the higher melting point compared to an aluminum material, the cell cover 200 may not be melted even in flames ejected from the battery cell 100, and its shape may be stably maintained. Therefore, flame propagation prevention or delay effects between battery cells 100, venting control effects, and the like may be excellently secured.

In addition, by surrounding the battery cell 100 with the cell cover 200, the battery cell 100 may be easily made into a solid form, thereby more facilitating a configuration in which the battery cell 100 is directly stacked inside the pack case 300. Therefore, assemblability and mechanical stability of the battery pack 10 may be improved.

According to this configuration of the present disclosure, a plurality of pouch-type battery cells 100 may be stably accommodated inside the pack case 300 without a configuration such as a stacking frame like a plastic cartridge, a separate module case, or the like.

Moreover, in the case of the present disclosure, a cell to pack (CTP) type battery pack 10 using the pouch-type battery cell 100 may be implemented more efficiently. That is, the battery pack 10 may be provided in a form of directly accommodating the pouch-type battery cell 100 inside the pack case 300, rather than accommodating the pouch-type battery cell 100 inside a separate module case and then accommodating the module case inside the pack case 300. At this time, at least one side of the pouch-type battery cell 100 may be exposed to the outside of the cell cover 200 and disposed to directly face the pack case 300.

Therefore, according to this aspect of the present disclosure, there is no need to additionally provide a module case, a frame for stacking, a fastening member such as a bolt for maintaining a stacked state of cells, or the like in the battery pack 10. Accordingly, a space occupied by other components such as the module case or the frame for stacking, or a space for securing tolerances caused thereby may be eliminated. Thus, since the battery cell 100 may occupy more space as much as the space from which other components are removed, the energy density of the battery pack 10 may be further improved.

In addition, according to this aspect of the present disclosure, since a module case, a frame for stacking, a bolt, or the like are not provided, the volume or weight of the battery pack 10 may be reduced, and the manufacturing process may be simplified.

Also, according to this aspect of the present disclosure, the handling of the pouch-type battery cell 100 may be more facilitated. For example, when the plurality of pouch-type battery cells 100 are accommodated inside the pack case 300, the pouch-type battery cells 100 may be gripped by a jig or the like. In this case, the jig may not grip the pouch-type battery cell 100 directly, but may grip the cell cover 200 surrounding the pouch-type battery cell 100. Therefore, damage to or breakage of the pouch-type battery cell 100 by the jig may be prevented.

In addition, the cooling efficiency of the battery pack 10 may be further improved. In particular, in the case of an embodiment of the present disclosure, a portion of each battery cell 100 may be directly exposed to the pack case 300, so that the heat of each battery cell 100 may be effectively discharged to the outside through the pack case 300.

The pack case 300 may form a space therein to accommodate the pouch-type battery cell 100. For example, the pack case 300 may include a first case 310, a second case 320, and a top cover 330. The first case 310 may be configured in the form of a box with an open top to accommodate a plurality of pouch-type battery cells 100 in an inner space. The second case 320 may be configured in the form of a box with an open top to accommodate the first case 310 in an inner space. The top cover 330 may be configured in the form of a cover covering the top openings of the first case 310 and the second case 320. On the other hand, the pack case 300 is not limited to the above structure, but may also have a double-walled structure in which the first case 310 and the second case 320 are integrally coupled, wherein a portion corresponding to the first case 310 is an inner wall and a portion corresponding to the second case 320 constitutes an outer wall. However, the following description will be limited to the case where the pack case 300 is composed of the first case 310 and the second case 320.

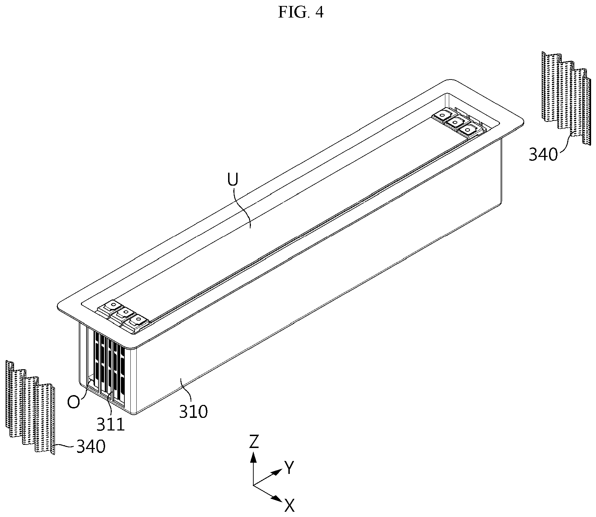

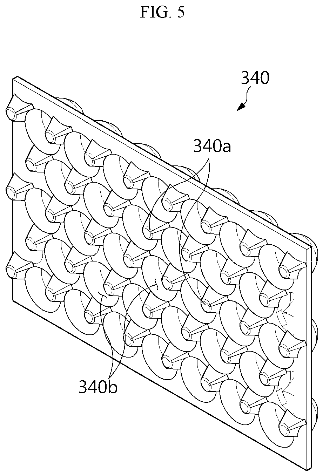

FIG. 4 is a view showing some components included in a battery pack 10 according to the present disclosure. FIG. 5 is a view showing an exemplary form of a flame-retardant portion included in a battery pack 10 according to the present disclosure.

Referring to FIGS. 4 and 5, the pack case 300 may include a flame-retardant portion 340. The flame-retardant portion 340 may be provided on the side where the opening O is located. The flame-retardant portion 340 may be provided on one side surface of the first case 310 facing the opening O. Here, the opening O may refer to a side surface positioned in the Y-axis extension direction of the cell unit U.

The flame-retardant portion 340 may be configured to reduce straightness of the gas and flame generated from at least one pouch-type battery cell 100. The flame-retardant portion 340 may not simply have a plate shape, but may have a shape that regularly protrudes or is recessed toward the discharge direction of the flame and gas. Therefore, some spaces may be formed between the regularly protruding or recessed portions of the substantially flat plate. Flame and gas may be collected in these spaces. For example, as shown in FIG. 4, the flame-retardant portion 340 may have a wedge-shaped structure in which a cross-section (a cross-section perpendicular to the Z-axis direction) of one side end includes a wavy shape. The flame-retardant portion 340 may be provided at a position corresponding to the cell unit U accommodated inside the first case 310. The wedge-shaped structure may include a plurality of wedge structures, each of which may be configured to form some spaces between the wedge-shaped structure and the outer surface of the first case 310 at a position corresponding to each cell unit U.

As shown in FIG. 5, the flame-retardant portion 340 may be a plate having a substantially egg carton shape with regularly protruding portions 340a and recessed portions 340b. The recessed portion 340b may be a portion that is concave inwardly, and the protruding portion 340a may be a portion that protrudes convexly around the recessed portion 340b. The flame-retardant portion 340 is not necessarily limited to the shape shown in FIG. 5 as long as it has regularly protruding or recessed portions, and the regularly protruding or recessed portions may be configured to form some spaces between them and the outer surface of the first case 310. For example, a three-dimensional structure such as various sound-absorbing wedges applied inside the anechoic chamber may be used for the flame-retardant portion 340. As is well known, a room designed to have a condition similar to a free sound field by preventing sound generated in the space inside the room from being reflected through walls, ceilings, and/or floors due to the installation of sound-absorbing materials or sound-absorbing blocks with a high sound absorption rate on walls, ceilings, and/or floors constituting the room, is called an anechoic chamber. As a traditional sound-absorbing material used in an anechoic chamber, a sound-absorbing wedge having a triangular cross-sectional shape protruding inside the anechoic chamber is typical. The flame-retardant portion 340 may also have a protruding triangular cross-sectional shape.

The flame-retardant portion 340 may be made of various materials to withstand high heat and high pressure. In particular, the flame-retardant portion 340 may be made of a metal material. In the case of such a metal material, the intensity of flame and gas may be effectively reduced.

The flame-retardant portion 340 may be configured to allow the gas and flame generated from at least one pouch-type battery cell 100 to pass therethrough. The flame-retardant portion 340 may have a hole through which the gas and flame pass. For example, the hole may be a plurality of regularly perforated holes as the flame-retardant portion 340 is configured as a perforated plate-shaped plate.

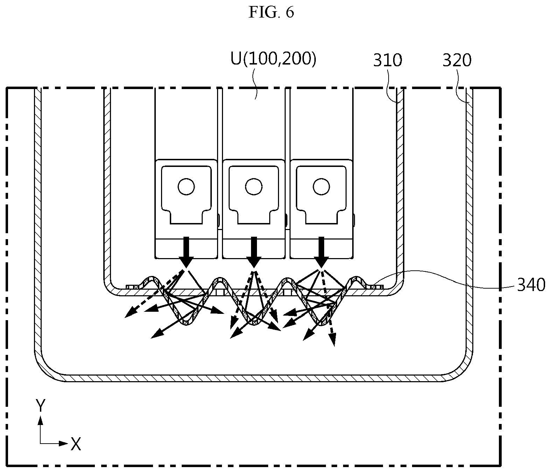

FIG. 6 is a view showing the path of gas and flame generated from a cell unit included in a battery pack according to the present disclosure.

The effect of the flame-retardant portion 340 of the present disclosure will be described in detail with reference to FIG. 6.

When a thermal event occurs inside the battery pack 10, the generated flame and gas are directed to the flame-retardant portion 340 through the opening O of the cell cover 200, some of the flame and gas are discharged through the hole formed in the flame retardation portion 340 like the path of the flame and gas illustrated by the dotted arrows in FIG. 6, and the remaining others collide continuously between some spaces that are formed in the flame retardation portion 340 like the path of the flame and gas illustrated by the solid arrows in FIG. 6. Therefore, as all of the flame and gas are discharged with a time difference according to the discharge path, rather than through the flame-retardant portion 340 at once, the intensity of the flame and gas may be reduced. Also, as the flame and gas continuously collide between some spaces formed between the flame-retardant portion 340 and the first case 310, resulting in decrease in the straightness of the flame and gas, the flame and gas may be discharged in a state of reduced intensity. In addition, the flame-retardant portion 340 may also serve to guide the flame path. Also, by providing the flame-retardant portion 340 at a position where the flame and gas are easily discharged, the gas may be discharged in a desired direction.

Referring to FIG. 3 again, the cell cover 200 may include a first cover portion 210, a second cover portion 220, and a top cover portion 230.

Referring to FIG. 3, the first cover portion 210 may be configured to cover one side surface of the wrapped pouch-type battery cell 100. The first cover portion 210 may be configured to cover the right side surface (a side surface located in the positive X-axis direction) of the wrapped pouch-type battery cell 100. The first cover portion 210 may cover the storage portion 110 and the sealing portion 120 of the wrapped pouch-type battery cell 100. The first cover portion 210 may have a plate shape.

The second cover portion 220 may face the first cover portion 210. The second cover portion 220 may cover the other side surface of the wrapped pouch-type battery cell 100. The second cover portion 220 may be configured to cover the left side surface (a side surface located in the negative X-axis direction) of the wrapped pouch-type battery cell 100. The second cover portion 220 may cover the storage portion 110 and the sealing portion 120 of the wrapped pouch-type battery cell 100. The second cover portion 220 may have a plate shape.

The cell cover 200 may be configured to support the pouch-type battery cell 100 in a state of standing between the first cover portion 210 and the second cover portion 220. The first cover portion 210 and the second cover portion 220 may be parallel to each other. Accordingly, a configuration in which the pouch-type battery cells 100 are stacked side by side in the left-right direction in a standing state may be stably maintained.

The top cover portion 230 may connect the first cover portion 210 and the second cover portion 220. The top cover portion 230 may cover one side of the wrapped pouch-type battery cell 100. The top cover portion 230 may cover the upper portion (a positive Z-axis direction) of the storage portion 110 of the wrapped pouch-type battery cell 100. The top cover portion 230 may have a plate shape.

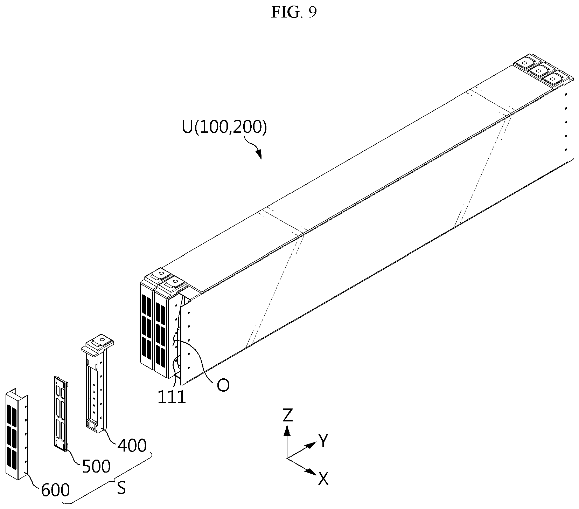

A side assembly (see S in FIG. 9 described below) may be inserted between the portion where the first cover portion 210 covers the sealing portion 120 and the portion where the second cover portion 220 covers the sealing portion 120. The first cover portion 210 and the second cover portion 220 may have a portion protruding further toward the electrode lead 111 than the top cover portion 230. That is, the cell cover 200 may have a shape in which portions of the first cover portion 210 and the second cover portion 220 are protruding more than the top cover portion 230 so that only portions of the first cover portion 210 and the second cover portion 220 cover the sealing portion 120 in an 'n' shape surrounding at least three surfaces of the storge portion 110.

At least some of the first cover portion 210, the second cover portion 220, and the top cover portion 230 may be integrally formed with each other. The first cover portion 210, the second cover portion 220, and the top cover portion 230 may be formed by bending one plate. This configuration of forming the bent portion in one plate to form the cell cover 200 may be implemented in various ways, such as by pressing or roll forming. According to this embodiment of the present disclosure, manufacturing of the cell cover 200 may be more simplified. Alternatively, the first cover portion 210, the second cover portion 220, and the top cover portion 230 may be separately manufactured, respectively, and then coupled to each other through adhesion, fitting, welding, or bolting.

The cell cover 200 may be included in the battery pack 10 in plurality. In this case, an adhesive member may be interposed between the cell covers 200. For example, an adhesive member may be interposed between the first cover portion 210 and/or the second cover portion 220, which are portions where the two cell covers 200 face each other, to adhere and fix them together. Through this adhesive configuration, the connection configuration between the plurality of cell covers 200 may be further strengthened. The adhesive member may be insulating to achieve insulation between the cell covers 200 that may be made of a metal material. In addition, the adhesive member may be thermally conductive. Through this adhesion, the cell cover 200 may be firmly coupled to the battery cell 100 and may help dissipate heat generated from the battery cell 100 to the outside of the battery cell 100.

The cell cover 200 may include an insulating coating layer on an inner surface. The insulating coating layer may be coated on the inner surface of the first cover portion 210 and/or the inner surface of the second cover portion 220. The insulating coating layer may be formed by coating, applying, or attaching any one insulating material selected from silicone resin, polyamide, and rubber. The insulating coating layer may maximize the insulating coating effect with a minimum coating amount. In addition, the insulating coating layer may be applied to the inner surface of the cell cover 200, thereby enhancing the insulation between the pouch-type battery cell 100 and the cell cover 200.

In FIG. 3, the number of pouch-type battery cells 100 surrounded by one cell cover 200 is two, for example. By adjusting the width of the cell cover 200, particularly, the width of the top cover portion 230, the number of pouch-type battery cells 100 surrounded by one cell cover 200 may be adjusted to one, or three or more as necessary. Accordingly, the cell unit U may also be referred to as a scalable pouch unit (SPU), and has an advantage of accommodating the pouch-type battery cell 100 in a variable and expandable manner depending on the capacity of the battery pack 10.

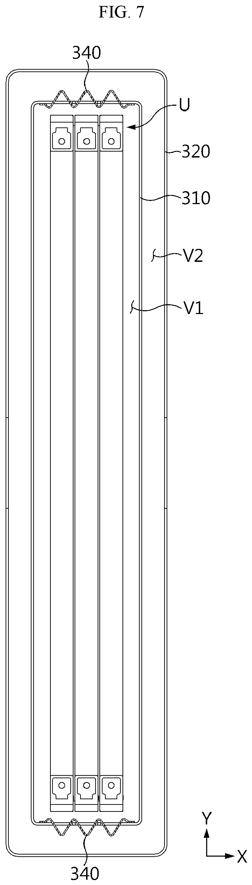

FIG. 7 is a view showing a partial cross-section of a battery pack 10 according to the present disclosure.

Referring to FIG. 7, the pack case 300 may include a storage space V1 and a venting space V2.

The storage space V1 may accommodate a plurality of pouch-type battery cells 100. The storage space V1 may be an inner space of the first case 310.

The venting space V2 may be located around the storage space V1. The venting space V2 may be a space excluding the space occupied by the first case 310 in the inner space of the second case 320. The venting space V2 may be provided on only one side of the storage space V1, or may be provided on the entire periphery of the storage space V1. The flame and gas passing through the flame-retardant portion 340 may be discharged to the outside of the pack case 300 through the venting space V2. The storage space V1 and the venting space V2 may be configured to communicate with each other through the flame-retardant portion 340. By partitioning the storage space V1 and the venting space V2, there is an advantage in that the venting direction may be controlled in a desired direction.

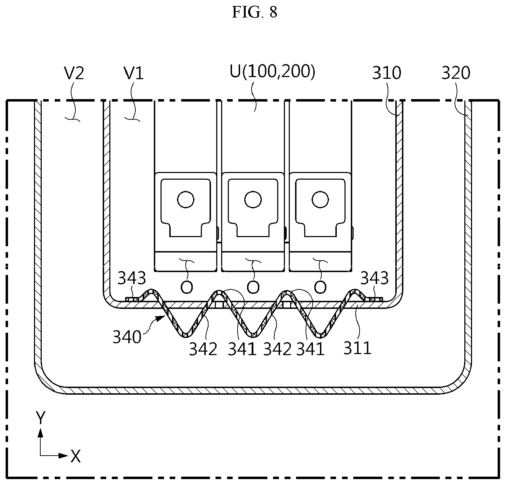

FIG. 8 is an enlarged view of a portion of FIG. 7.

Referring to FIG. 8, the flame-retardant portion 340 may include an isolation portion 341, a capture portion 342, and a coupling portion 343.

When the cell cover 200 in in plurality, the isolation portion 341 may be provided at a corresponding position between adjacent cell covers 200. At least a portion of the isolation portion 341 may be located between the storage space V1 and the venting space V2. At least a portion of the isolation portion 341 may be located within the first case 310 partitioning the storage space V1 and the venting space V2.

The capture portion 342 may be provided at a position corresponding to the opening O of each cell cover 200. Here, the opening O may refer to a side surface located in the Y-axis extension direction of the cell unit U. The capture portion 342 may be located within the venting space V2. The capture portion 342 may be configured to have a certain space between the capture portion 342 and the first case 310.

The coupling portion 343 may be configured to be coupled to the pack case 300. The coupling portion 343 may be configured to be in contact with the inner surface of the first case 310. The coupling may be by welding or bolting.

Referring to FIG. 8, the pack case 300 may include an accommodation portion 311.

Referring to FIG. 8 together with FIG. 4, the accommodation portion 311 may be configured to accommodate the flame-retardant portion 340. The accommodation portion 311 may be provided on a side surface where the flame-retardant portion 340 of the first case 310 is provided. The accommodation portion 311 may be an opening formed to allow the flame-retardant portion 340 to be inserted.

The flame-retardant portion 340 may be accommodated in the accommodation portion 311 by first inserting it toward the accommodation portion 311 in the inner space of the first case 310. In this case, the coupling portion 343 may be coupled by being caught on the inner surface of the first case 310.

According to this structure of the present disclosure, the movement of flame and gas between adjacent cell units U may be blocked by the isolation portion 341. Therefore, the reverse flow of flame and gas may be prevented by this structure. This is to prevent reverse flow by making it difficult for the flame and gas already discharged from the battery cell 100 to return to the battery cell 100 side. Thus, when a thermal event occurs inside the battery pack 10, it is possible to effectively prevent heat propagation from one cell unit U in which the thermal event occurs to the battery cell 100 in another cell unit U. In addition, coupling between the flame-retardant portion 340 and the pack case 300 may be facilitated.

FIG. 9 is a view showing some components of a battery pack according to the present disclosure.

Referring to FIG. 9, the battery pack 10 may further include a side assembly S.

The side assembly S may cover the opening O of the cell cover 200. The side assembly S may be configured to cover the opening O of the cell cover 200 formed on the side where the electrode lead 111 is provided. At least a portion of the side assembly S may be inserted into the cell cover 200. The side assembly S may be provided on a side surface that is not surrounded by each cell cover 200 for each cell unit U. In this embodiment, the cell cover 200 surrounds at least three sides of the pouch-type battery cell 100, and exposes the front and rear provided with electrode leads 111 and the bottom of the pouch-type battery cell 100. Therefore, the side assembly S may be provided in the portion where the electrode lead 111 is provided in the pouch-type battery cell 100 at the front and rear of the cell cover 200. At least a portion of the side assembly S may be inserted into the cell cover 200.

In the cell cover 200, portions of the first cover portion 210 and the second cover portion 220 may protrude more than the top cover portion 230. A portion of the side assembly S may protrude more than the top cover portion 230, and the other portion thereof may be inserted into and in contact with the inner side of the first cover portion 210 and the inner side of the second cover portion 220 of the portion protruding more than the top cover portion 230.

According to this configuration of the present disclosure, the cell cover 200 and the side assembly S may be efficiently coupled as a structure in which the side assembly S is inserted into the cell cover 200.

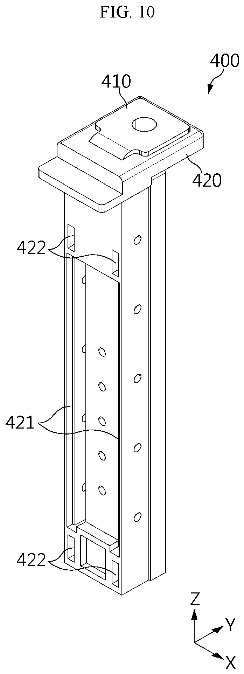

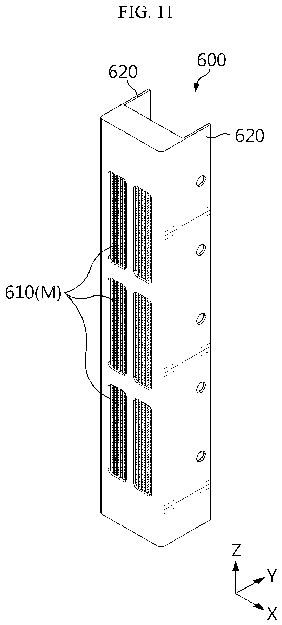

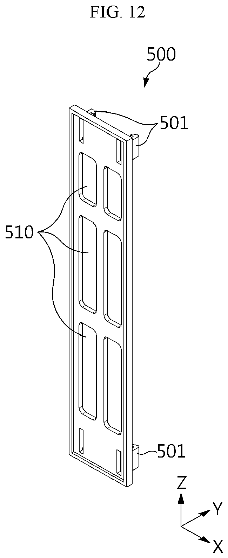

FIG. 10 is a view showing a bus bar assembly included in a battery pack according to the present disclosure. FIG. 11 is a view showing an end cover included in a battery pack according to the present disclosure. FIG. 12 is a view showing an intermediate cover included in a battery pack according to the present disclosure.

Referring to FIGS. 10 to 12 together with FIG. 9, the side assembly S may include a bus bar assembly 400, an intermediate cover 500, and an end cover 600.

The bus bar assembly 400 may be configured to electrically connect the electrode lead 111. The bus bar assembly 400 may be configured such that the bus bar terminal 410 connected to the electrode lead 111 and the bus bar terminal 410 are seated, and may include a bus bar frame 420 with a lead accommodation portion 421 accommodating the electrode lead 111.

The bus bar assembly 400 may have a groove 422 for coupling to the intermediate cover 500. The groove 422 may have a recessed shape on an outer surface located in the negative Y-axis direction of the bus bar assembly 400.

The end cover 600 may cover one side of the bus bar assembly 400. The end cover 600 may be configured to discharge gas generated from at least a portion of the wrapped pouch-type battery cell 100. The end cover 600 may include a first venting portion 610. The first venting portion 610 may be configured to discharge gas and flame generated from at least a portion of the pouch-type battery cell 100 surrounded by the cell cover 200.

The first venting portion 610 may be in the form of a simple hole as a shape penetrating the end cover 600. In addition, it may be not only in a completely open form, but also a specific device that is closed, rather than being completely open, in a normal state and may be opened according to a change in pressure or temperature. The first venting portion 610 may be, for example, a one-way valve. This description of the first venting portion 610 may be likewise applied to the second venting portion 301 (see 301 in FIG. 1) of the pack case 300 to be described later.

The first venting portion 610 may include a mesh member M. The mesh member M may be configured to function as a flame arrester by being provided in the form of overlapping a plurality of porous metal plates. However, the mesh member M may also be provided in the form of a mesh plate between the intermediate cover 500 and the end cover 600.

According to this configuration of the present disclosure, when gas and flame are generated due to swelling or thermal runaway in the pouch-type battery cell 100, they may be discharged to the outside the cell unit U through the first venting portion 610 of the end cover 600. Therefore, by inducing side venting, the gas and flame may be prevented from being randomly discharged through the open portion of the cell cover 200. As described above, by including the cell cover 200 including the opening O and the end cover 600 coupled to the opening O, the direction of the gas or flame may be guided in a specific direction, and the battery pack 10 having excellent swelling response performance may be provided.

In addition, since the first venting portion 610 is formed on the end cover 600 covering the open portion of the cell cover 200, the first venting portion 610 may have a smaller area than the area covered by the open portion of the cell cover 200 or the end cover 600. Therefore, compared to the case without the end cover 600, the discharge angle of the venting gas or flame may be minimized when the end cover 600 is provided, thereby minimizing the transition of the flame.

Therefore, the gas or flame discharged through the first venting portion 610 is directed to the flame retardation portion 340, so that the effect of delaying the flow of the gas or flame through the flame retardation portion 340 may be maximized. As described above, some of the gas or flame discharged through the first venting portion 610 are discharged directly through the flame retardation portion 340, and the remaining others may continuously collide with the flame-retardant portion 340 in some spaces formed between the first case 310 and the flame retardation portion 340, thereby delaying the discharge.

The end cover 600 may include a guide portion 620. The guide portion 620 may protrude in the positive Y-axis direction to form a surface having a predetermined width from an end of the inner surface of the end cover 600 located in the positive Y-axis direction. The guide portion 620 may be inserted and coupled between the cell cover 200 and the bus bar assembly 400.

Referring to FIGS. 9 and 12, the intermediate cover 500 may be provided on one side of the bus bar assembly 400. The intermediate cover 500 may be provided between the bus bar assembly 400 and the end cover 600. The intermediate cover 500 may include a communication portion 510. The intermediate cover 500 may include a hook 501. The hook 501 may protrude from the inner surface positioned in the positive Y-axis direction of the intermediate cover 500.

The intermediate cover 500 may include an insulating material. The insulating material may block an electrical connection between the bus bar assembly 400 and the end cover 600.

According to this configuration of the present disclosure, the flow of flame that may occur in the pouch-type battery cell 100 may be primarily blocked by the intermediate cover 500, thereby reducing the intensity of the flame and preventing a rapid discharge of the flame into the first venting portion 610. In addition, a short circuit caused by contact between the bus bar assembly 400 and the end cover 600 may be prevented.

Describing the assembly process of the battery pack 10 according to the above embodiment, the battery cell 100 is surrounded by the cell cover 200, and then the bus bar assembly 400 is inserted into the open portion of the cell cover 200 and assembled. After penetrating the electrode lead 111 of the battery cell 100 through the lead accommodation portion 421, it is bent and fixed to the bus bar terminal 410 through a known bonding means such as welding. The intermediate cover 500 is assembled to the bus bar assembly 400. The end cover 600 is assembled to the intermediate cover 500. Next, the end cover 600 is welded. Due to the unique coupling structure of the bus bar assembly 400, the intermediate cover 500, and the end cover 600, coupling between them may be easily and efficiently performed.

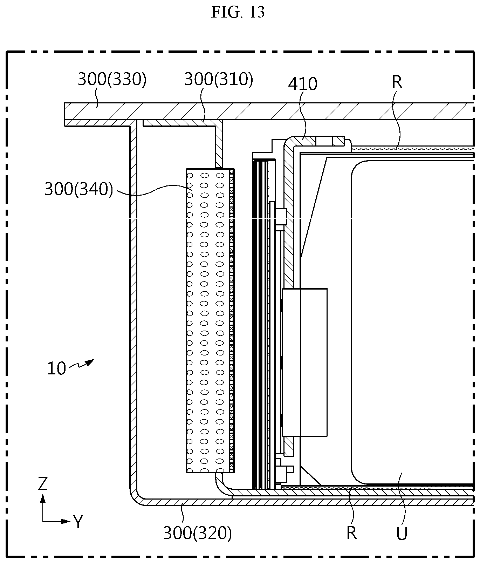

FIG. 13 is a view showing a partial cross-section of a battery pack according to the present disclosure.

Referring to FIG. 13, the battery pack 10 may include a thermal resin R.

Referring to FIGS. 13 together with FIG. 2, the thermal resin R may be interposed in at least a portion of the space between the cell cover 200 and the pack case 300 and the space between the plurality of pouch-type battery cells 100 and the pack case 300. That is, the thermal resin R may be interposed in at least a portion of the space between the cell unit U and the pack case 300. The thermal resin R may enhance heat transfer performance between different components. The thermal resin R is intended to reduce contact thermal resistance between different components. By including the thermal resin R, the heat dissipation performance of the pouch-type battery cell 100 may be further enhanced, so that the cooling performance of the battery pack 10 may be further improved.

Referring to FIG. 1 again, the pack case 300 may include a second venting portion 301.

The second venting portion 301 may be configured to communicate with the first venting portion 610 of the end cover 600 described with reference to FIG. 11 and the like to discharge gas and/or flame generated in at least one of the cell units U accommodated inside the pack case 300 to the outside of the battery pack 10. The second venting portion 301 is provided at a position farthest from the first venting portion 610 to maximize the movement path of the gas and flame, thereby effectively reducing the intensity of the gas and flame. In the illustrated example, since the first venting portion 610 may be located at both ends of the pack case 300 in the Y-axis direction, the position farthest from the first venting portion 601 is a middle position of the pack case 300 in the Y-axis direction. The speed and temperature of the gas or flame discharged from the first venting portion 610 are lowered while moving within the venting space V to the location of the second venting portion 301, so that the gas or flame may be finally discharged to the outside of the battery pack 10 in a less threatening state. A detailed description of the second venting portion 301 may be replaced with a description of the first venting portion 610.

As described above, upon ignition of the battery cell 100, the cell cover 200 controls the initial flame direction. The flame-retardant portion 340 reduces the intensity of the gas and flame discharged from the opening O of the cell cover 200 and prevents them from flowing backward to other adjacent battery cells 100. The discharge angle of the gas and flame discharged through the flame-retardant portion 340 may be minimized by the end cover 600, thereby further minimizing the transition of the flame. In this way, the battery pack 10 of the present disclosure may secure excellent safety in the event of a thermal event.

The battery pack 10 according to the present disclosure may further include a battery management system (BMS) and a battery disconnect unit (BDU). The BMS is mounted in the inner space of the pack case 300 and may be configured to generally control the charge/discharge operation or data transmission/reception operation of the pouch-type battery cell 100. The BMS may be provided in the battery pack 10 unit rather than the battery module unit. More specifically, the BMS may be provided to control the charge/discharge state, power state, performance state, and the like of the pouch-type battery cell 100 through pack voltage and pack current. The BMS estimates the state of the battery cell 100 within the battery pack 10 and manages the battery pack 10 using the estimated state information. For example, state information of the battery pack 10, such as state of charge (SOC), state of health (SOH), maximum input/output power allowance, output voltage, and the like is estimated and managed. In addition, this state information may be used to control charging or discharging of the battery pack 10, and further to estimate a replacement time of the battery pack 10. The BDU may be configured to control the electrical connection of the battery cell 100 in order to manage the power capacity and function of the battery pack 10. To this end, the BDU may include a power relay, a current sensor, a fuse, and the like. The BDU may also be provided in the battery pack 10 unit rather than the battery module unit, and various blocking units known at the time of filing of the present disclosure may be employed.

In addition, the battery pack 10 according to the present disclosure may further include various components of the battery pack 10 known at the time of filing of the present disclosure. For example, the battery pack 10 according to an embodiment of the present disclosure may further include a manual service disconnector (MSD) that allows an operator to manually disconnect the service plug to cut off power. Also, flexible bus bars or cables for interconnecting the plurality of battery cells 100 having an n×n arrangement as described above may be further included.

However, the present disclosure may apply the structure applied to the battery pack 10 described above to the battery module. That is, by applying the structure of the pack case 300 to a module case, a plurality of cell units U may be accommodated in the module case, and a venting portion may be provided in the module case, thereby configuring a battery module. This battery module is accommodated in the inner space of the pack case 300 in one or more, includes the plurality of pouch-type battery cells 100 and the cell cover 200 as described above, and may include a module case (the structure of the pack case 300 of the battery pack 10 according to the present disclosure as described above may be used as it is) accommodating the pouch-type battery cells 100 in the inner space thereof.

The battery pack 10 according to the present disclosure or the battery module described herein may be applied to various devices. These devices typically include transportation means such as an electric bicycle, an electric vehicle 1, a hybrid vehicle 1, and the like, but the present disclosure is not limited thereto. In particular, the battery pack 10 is suitable to be utilized as the battery pack 10 for the electric vehicle 1. Also, it may be used as an energy source for an ESS.

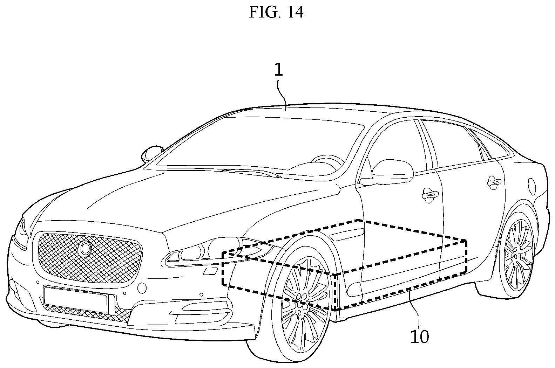

FIG. 14 is a view showing a vehicle according to the present disclosure.

Referring to FIG. 14, a vehicle 1 may include the battery pack 10 according to the present disclosure described above. Also, the vehicle 1 according to the present disclosure may further include various other components included in the vehicle 1 in addition to the battery pack 10. For example, the vehicle 1 according to the present disclosure may further include a vehicle body, a motor, a control device such as an electronic control unit (ECU), and the like in addition to the battery pack 10 according to the present disclosure.

The battery pack 10 may be disposed at a predetermined location within the vehicle 1. The battery pack 10 may be used as an electric energy source for driving the vehicle 1 by providing driving force to the motor of the electric vehicle 1. In this case, the battery pack 10 has a high nominal voltage of 100 V or more.

The battery pack 10 may be charged or discharged by an inverter according to driving of a motor and/or an internal combustion engine. The battery pack 10 may be charged by a regenerative charging device coupled to a brake. The battery pack 10 may be electrically connected to the motor of the vehicle 1 through an inverter.

In this way, the battery pack 10 provided in the vehicle 1 may provide electrical energy required for various operations of the vehicle 1. In addition, since the battery pack 10 has various effects mentioned above, the vehicle 1 including the battery pack 10 may also have such effects.

In one specific example, the battery pack 10 may omit the module case by including the cell cover 200, and thus may have a high energy density. Energy density refers to the amount of energy stored per unit weight. When the energy density of the battery pack 10 is increased, more energy is stored in the battery pack 10 at the same weight. Therefore, a vehicle 1 including such a battery pack 10 may have a variety of utilization potentials, such as increasing the mileage per charge, speeding up the acceleration, loading more luggage, making the interior space larger, and the like. In addition, when the energy density of the battery pack 10 is increased, it becomes lighter at the same energy. When the battery pack 10 becomes lighter and the vehicle 1 including the same becomes lighter, this also has several advantages in that acceleration is improved, energy efficiency is improved, durability is improved, and the like.

For another specific example, the battery pack 10 may have a high degree of safety. Since a vehicle 1 is an object directly related to human life, safety is what can never be compromised. In the pouch-type battery cell 100, there is always a risk of fire due to the physical properties of lithium. However, the battery pack 10 according to the present disclosure includes the cell cover 200, and thus, even if a thermal event occurs in the pouch-type battery cell 100, it may be prevented from being transferred to other portions. Therefore, the fire safety of the vehicle 1 including the battery pack 10 is ensured.

As described above, the present disclosure has been described mainly with preferred embodiments with reference to the accompanying drawings, but it is apparent to those skilled in the art that many and various obvious modifications are possible from this description without departing from the scope of the present disclosure. Therefore, the scope of the present disclosure should be construed by the claims which are written to include examples of such many modifications.

### [Explanation of reference signs]

1: vehicle
10: battery pack
U: cell unit
100: battery cell
111: electrode lead
110: storage portion
120: sealing portion
200: cell cover
210: first cover portion
220: second cover portion
230: top cover portion
300: pack case
301: second venting portion
3 10: first case
311: accommodation portion
V1: storage space
320: second case
V2: venting space
330: top cover
340: flame-retardant portion
341: isolation portion
342: capture portion
343: coupling portion
S: side assembly
400: bus bar assembly
410: bus bar terminal
420: bus bar frame
421: lead accommodation portion
422: groove
500: intermediate cover
510: communication portion
501: hook
600: end cover
610: first venting portion
620: guide portion
M: mesh
R: resin
O: opening

## Claims

1. A battery pack comprising:
a plurality of pouch-type battery cells;
a pack case accommodating the plurality of pouch-type battery cells in an inner space; and
a cell cover configured to partially surround the outer side of at least one pouch-type battery cell among the plurality of pouch-type battery cells to form an opening,
wherein the pack case comprises a flame-retardant portion on the side where the opening is located.

2. The battery pack according to claim 1,
wherein the flame-retardant portion is configured to reduce the straightness of the gas and flame generated from the at least one pouch-type battery cell to pass therethrough.

3. The battery pack according to claim 2,
wherein the inner space of the pack case comprises:
a storage space for accommodating the plurality of pouch-type battery cells; and
a venting space around the storage space,
wherein the gas and flame passing through the flame-retardant portion are allowed to be discharged to the outside of the pack case through the venting space.

4. The battery pack according to claim 3,
wherein the cell cover is in plurality, and
the flame-retardant portion comprises:
an isolation portion provided at a corresponding position between adjacent cell covers; and
a capture portion provided at a position corresponding to the opening of each of the cell covers.

5. The battery pack according to claim 4,
wherein at least a portion of the isolation portion is located between the storage space and the venting space, and
the capture portion is located within the venting space.

6. The battery pack according to claim 1,
wherein the pack case comprises an accommodation portion configured to accommodate the flame-retardant portion.

7. The battery pack according to claim 4,
wherein the flame-retardant portion comprises a coupling portion configured to be coupled to the pack case.

8. The battery pack according to claim 3,
wherein the flame-retardant portion is a wedge-shaped structure comprising a wavy shape in a cross-section of at least one end.

9. The battery pack according to claim 1,
wherein the cell cover comprises:
a first cover portion covering one side surface of the wrapped pouch-type battery cell;
a second cover portion covering the other side surface of the wrapped pouch-type battery cell; and
a top cover portion connecting the first cover portion and the second cover portion and covering one side of the wrapped pouch-type battery cell.

10. The battery pack according to claim 9,
wherein each of the plurality of pouch-type battery cells comprises an electrode lead, and
the cell cover forms the opening at an end of the side where the electrode lead is provided among ends of the first cover portion and at an end of the side where the electrode lead is provided among ends of the second cover portion.

11. The battery pack according to claim 10,
which further comprises a side assembly covering the opening.

12. The battery pack according to claim 11,
wherein at least a portion of the side assembly is inserted into the cell cover.

13. The battery pack according to claim 12,
wherein the side assembly comprises:
a bus bar assembly configured to electrically connect the electrode leads; and
an end cover covering one side of the bus bar assembly and configured to discharge gas generated from at least a portion of the wrapped pouch-type battery cell.

14. The battery pack according to claim 13,
wherein the side assembly comprises an intermediate cover between the bus bar assembly and the end cover for insulation.

15. The battery pack according to claim 11,
wherein the side assembly comprises a mesh portion.

16. The battery pack according to claim 1,
which comprises a thermal resin in at least a portion of the space between the cell cover and the pack case and the space between the plurality of pouch-type battery cells and the pack case.

17. The battery pack according to claim 9,
wherein the cell cover is configured to support the pouch-type battery cell in a state of standing between the first cover portion and the second cover portion.

18. The battery pack according to claim 9,
wherein the cell cover comprises an insulating coating layer on at least a portion of the inner surface of the first cover portion and the inner surface of the second cover portion.

19. The battery pack according to claim 9,
wherein the cell cover comprises an adhesive member on at least a portion of the outer surface of the first cover portion and the outer surface of the second cover portion.

20. A vehicle comprising a battery pack according to any one of claims 1 to 19.
